# EUROPÄISCHE PATENTSCHRIFT

(11) **EP 2 916 686 B1**
(45) Veröffentlichungstag und Bekanntmachung des Hinweises auf die Patenterteilung: **24.02.2016**
(21) Anmeldenummer: 13766895.0
(22) Anmeldetag: 18.09.2013
(51) Int. Cl.: A47B 13/08, A47B 21/06

(54) **GLEITFÜHRUNGSELEMENT UND TISCHPLATTENBEFESTIGUNGSSYSTEM ZUR VERSCHIEBBAREN BEFESTIGUNG EINER TISCHPLATTE**
SLIDING-GUIDE ELEMENT AND TABLETOP-FASTENING SYSTEM FOR FASTENING A TABLETOP IN A DISPLACEABLE MANNER
ÉLÉMENT DE GUIDAGE COULISSANT ET SYSTÈME DE FIXATION DE PLATEAU DE TABLE POUR LA FIXATION COULISSANTE D'UN PLATEAU DE TABLE

(30) Priorität: 08.11.2012 DE 102012021835
(43) Veröffentlichungstag der Anmeldung: 16.09.2015
(73) Patentinhaber: Steelcase Inc., Grand Rapids, Michigan 49508 (US)
(72) Erfinder: RUTZ, Josef, 83022 Rosenheim (DE)
(74) Vertreter: Andrae | Westendorp Patentanwälte Partnerschaft
(86) Internationale Anmeldenummer: PCT/EP2013/002811
(87) Internationale Veröffentlichungsnummer: WO 2014/072007

(56) Entgegenhaltungen:
- EP-A2- 0 830 825
- DE-C1- 19 508 378

## Beschreibung

Die Erfindung betrifft ein Gleitführungselement und ein Tischplattenbefestigungssystem zur verschiebbaren Befestigung einer Tischplatte.

Bestimmte Arten von Tischen, insbesondere Bürotische, sind derart konstruiert, dass die Tischplatte relativ zum Tischgestell in horizontaler Richtung und insbesondere vom Benutzer weg und zu diesem hin verschiebbar sind. Dies ist insbesondere dann der Fall, wenn am Tischgestell unterhalb der Tischplatte ein Kabelkanal, eine Kabelbox oder ähnliches angeordnet sind, die beim normalen Benutzen des Tisches von der Tischplatte überdeckt sein sollen, andererseits jedoch auch auf einfache Weise, beispielsweise zum Einlegen von Kabeln, Anschließen von Steckern etc., von oben her zugänglich sein sollen.

Zum verschiebbaren Befestigen von Tischplatten am Tischgestell werden bekanntermaßen unterschiedlichste Schlittenführungen verwendet, siehe zum Beispiel EP 0830825A. Diese Schlittenführungen haben jedoch den Nachteil, dass sie relativ kompliziert aufgebaut sind und die Montage der Tischplatte am Tischgestell erschweren.

Der Erfindung liegt die Aufgabe zugrunde, ein Gleitführungselement und ein Tischplattenbefestigungssystem zu schaffen, mit dem die verschiebbare Befestigung einer Tischplatte an einem Tischgestell auf möglichst schnelle, einfache und kostengünstige Weise erfolgen kann und die ein sicheres, leichtgängiges und präzises Verschieben der Tischplatte auf dem Tischgestell ermöglicht.

Diese Aufgabe wird erfindungsgemäß durch ein Gleitführungselement mit den Merkmalen des Anspruches 1 und durch ein Tischplattenbefestigungssystem mit den Merkmalen des Anspruchs 9 gelöst. Vorteilhafte Ausführungsformen der Erfindung sind in den weiteren Ansprüchen beschrieben.

Das erfindungsgemäße Gleitführungselement weist einen an der Unterseite der Tischplatte befestigbaren Grundkörper mit einem Führungsabschnitt auf, der in einen Führungsschlitz der Auflagestreben einsetzbar und innerhalb des Führungsschlitzes verschiebbar ist und Seitenführungsflächen zur seitlichen Führung innerhalb des Führungsschlitzes aufweist. Weiterhin sind auf gegenüberliegenden Seiten des Grundkörpers des Gleitführungselementes federnde Schnappschenkel angeordnet, die zwischen einer Untergreifstellung, in der sie seitlich über den Führungsabschnitt vorstehen, um eine Wand der Auflagestreben zu untergreifen, und einer Einführstellung bewegbar sind, in der sie durch den Führungsschlitz der Auflagestreben hindurchführbar sind. Weiterhin weist das Gleitführungselement an mindestens einem seiner Endbereiche einen federnd nachgiebigen Anschlagdämpfer auf.

Mit Hilfe des Gleitführungselements kann die Tischplatte auf sehr einfache und schnelle Weise verschiebbar am Tischgestell befestigt werden. Hierzu ist es lediglich erforderlich, die Tischplatte, nachdem die Gleitführungselemente an der Unterseite der Tischplatte befestigt worden sind, auf das Tischgestell aufzulegen und gegebenenfalls geringfügig anzudrücken, um den Führungsabschnitt des Grundkörpers zusammen mit den Schnappschenkeln durch den Führungsschlitz der Auflagestreben hindurch zu führen und allein dadurch die Tischplatte verschiebbar am Tischgestell zu befestigen. Hierbei untergreifen die Schnappschenkel die Wand der Auflagestreben, so dass die Tischplatte nicht mehr vom Tischgestell abgehoben werden kann, ohne dass vorher die Schnappschenkel zurück gedrückt werden. Die Montage der Tischplatte am Tischgestell erfolgt somit durch ein "Festklippsen" der Tischplatte an den Auflagestreben des Tischgestells. Durch den Führungsabschnitt des Grundkörpers wird die Tischplatte gleichzeitig seitlich an den Auflagestreben des Tischgestells geführt, so dass hierzu keine separaten Vorrichtungen erforderlich sind.

Gemäß einer vorteilhaften Ausführungsform umfasst der Grundkörper des Gleitführungselemtes einen auf eine Wand der Auflagestreben aufsetzbaren Auflageabschnitt, der seitlich über den Führungsabschnitt vorsteht. Durch diesen Auflageabschnitt des Grundkörpers wird die Tischplatte, vorzugsweise zusätzlich zu Auflagekissen, die auf den Auflagestreben angeordnet sind und auf denen die Tischplatte aufliegt, vertikal abgestützt.

Vorteilhafter Weise weisen die Schnappschenkel des Gleitführungselementes einen Führungssteg auf, der in der Untergreifstellung in den Führungsschlitz eingreift und dadurch die seitliche Relativposition der Schnappschenkel zum Grundkörper bestimmt. Der Führungssteg stellt damit ein seitliches Positioniermittel für den Schnappschenkel dar. Die Führungsstege bewirken, dass die Schnappschenkel bei einem Anheben der Tischplatte nicht seitlich nach außen weggebogen werden.

Vorteilhafterweise erstreckt sich der Schnappschenkel von einem unteren Bereich des Grundkörpers schräg nach oben. Hierdurch kann auf einfache Weise einerseits die federnde Kopplung des Schnappschenkels am Grundkörper realisiert und andererseits der Schnappschenkel derart schräg angeordnet oder mit keilförmigen Stegen an seiner Außenseite versehen werden, dass der Schnappschenkel bei zunehmendem Einführen des Einsteckabschnitts in den Führungsschlitz zunehmend zur Längsmittelebene des Gleitführungselements gedrückt wird, bis er unterhalb der Wand wieder seitlich nach außen zurückfedern und die Wand untergreifen kann.

Vorteilhafterweise sind die Schnappschenkel in Längsrichtung des Gleitführungselementes zwischen einem vorderen Befestigungsabschnitt und einem hinteren Befestigungsabschnitt des Gleitführungselementes angeordnet. Hierdurch kann das Gleitführungselement auf einfache Weise symmetrisch ausgebildet werden, ohne dass die Gleitführungselemente beim Aufbringen von Abhebe- oder Seitenkräften verspannt werden.

Vorteilhafterweise sind der vordere und der hintere Befestigungsabschnitt des Gleitführungselements mittels eines Verbindungsstegs miteinander verbunden, der eine geringere Breite als die Befestigungsabschnitte hat, wodurch ein Freiraum zum Hineinschwenken des Schnapphebels gebildet wird.

Erfindungsgemäß weist das Gleitführungselement an mindestens einem seiner Endbereiche einen federnd nachgiebigen Anschlagdämpfer auf, der zur Begrenzung des Verschiebewegs der Tischplatte mit dem Ende des Führungsschlitzes oder mit einem Gegenanschlag in Kontakt gelangt. Mit einem derartigen Anschlagdämpfer kann auf einfache Weise ein hartes Anschlagen der Tischplatte am Ende des Verschiebewegs vermieden werden. Auf sehr einfache Weise kann ein derartiger Anschlagdämpfer durch eine flexible Stirnwand des Grundkörpers realisiert werden, die sich über einen angrenzenden Hohlraum des Grundkörpers erstreckt.

Die eingangs genannte Aufgabe wird ferner gemäß Anspruch 9 durch ein Tischplattenbefestigungssystem zur verschiebbaren Befestigung einer Tischplatte an Auflagestreben eines Tischgestells mit einer Mehrzahl von Gleitführungselementen der vorstehend genannten Art gelöst, wobei die Auflagestreben an ihrer Oberseite Führungsschlitze aufweisen, durch welche die Führungsabschnitte der Gleitführungselemente mit geringem seitlichen Spiel und die Schnappschenkel hindurchführbar sind, und wobei eine Wand der Auflagestreben von den sich in ihrer Untergreifstellung befindenden Schnappschenkeln derart hintergriffen ist, dass ein Abheben der Tischplatte vom Tischgestellt verhindert wird. Ein derartiges Tischplattenbefestigungssystem weist die gleichen Vorteile auf, wie im Zusammenhang mit dem Gleitführungselement beschrieben.

Die Erfindung wird nachfolgend anhand der Zeichnungen beispielhaft näher erläutert. Es zeigen:
- Figur 1 :: eine räumliche Darstellung eines Tisches, bei dem erfindungsgemäße Gleitführungselemente zum Einsatz kommen,
- Figur 2 :: einen seitlichen Endbereich des Tisches von Figur 1 in vergrößerter Darstellung,
- Figur 3 :: den Tisch von Figur 1 schräg von unten,
- Figur 4 :: die Einzelheit IV von Figur 3 in vergrößerter Darstellung,
- Figur 5 :: einen Vertikalschnitt durch den Tisch von Figur 1 im Bereich der Gleitführungselemente,
- Figur 6 :: die Einzelheit VI von Figur 5 in vergrößerter Darstellung,
- Figur 7 :: eine räumliche Darstellung des erfindungsgemäßen Gleitführungselements schräg von oben, und
- Figur 8 :: eine räumliche Darstellung des Gleitführungselements von Figur 7 schräg von unten.

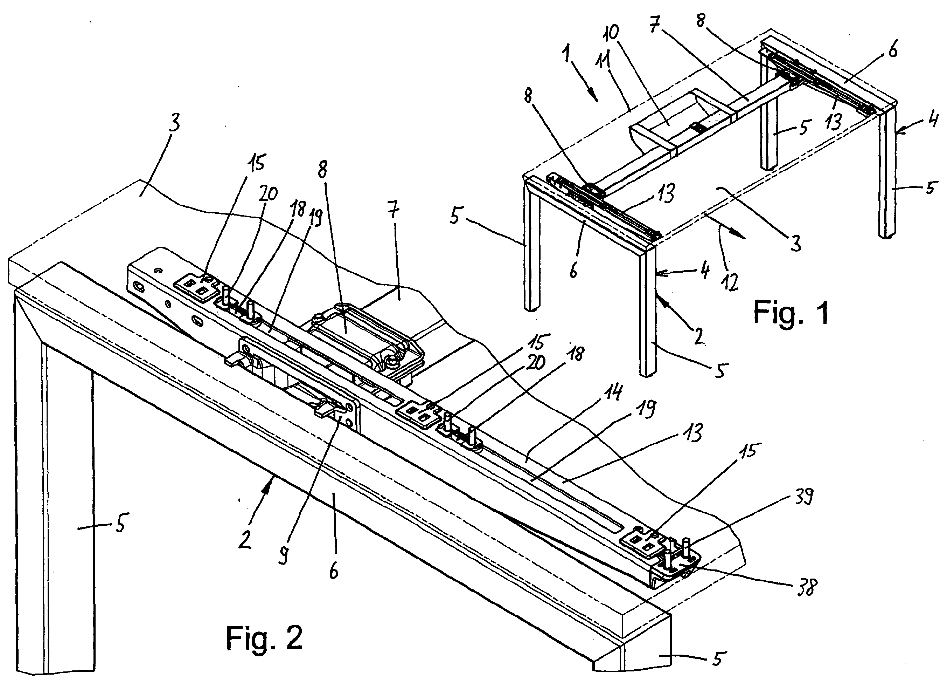

Die Figuren 1 bis 5 zeigen einen Tisch 1 mit einem Tischgestell 2 und einer auf dem Tischgestell 2 verschiebbar angeordneten Tischplatte 3. Tische dieser Art werden insbesondere in Büros eingesetzt, können jedoch auch anderweitig Verwendung finden.

Das Tischgestell 2 umfasst zwei U-förmige Seitengestellteile 4, die jeweils durch zwei vertikale Tischbeine 5 und eine Horizontalstrebe 6 gebildet werden, welche die beiden vertikalen Tischbeine 5 an deren oberen Ende miteinander verbindet. Anders geformte Seitengestellteile wie beispielsweise solche, die nur eine einzige mittige Vertikalstütze haben, sind im Rahmen der Erfindung ohne weiteres möglich.

Die beiden Seitengestellteile 4 sind mittels einer Längsstrebe 7 fest miteinander verbunden. Diese Längsstrebe 7 besteht im dargestellten Ausführungsbeispiel aus einem Hohlprofil mit rechteckigem Querschnitt. Die Befestigung der Längsstrebe 7 an den beiden Seitengestellteilen 4 erfolgt mittels zwei manschettenartiger Befestigungskonsolen 8, welche die gegenüberliegenden Endbereiche der Längsstrebe 7 umschließen und an den Horizontalstreben 6 befestigt, insbesondere festgeschraubt, sind. Hierzu weisen die Befestigungskonsolen 8 Flansche 9 auf (Figur 2), die an die inneren Seitenflächen der Horizontalstreben 6 angelegt und mit den Horizontalstreben 6 fest verschraubt werden können. Weiterhin verläuft die Längsstrebe 7 mit einem bestimmten, jedoch geringen Vertikalabstand unterhalb der Tischplatte 3.

Die gegenseitige Verbindung der Seitengestellteile 4 muss nicht mittels einer einzigen Längsstrebe 7 erfolgen. Es können auch eine Mehrzahl von Längsstreben 7, insbesondere zwei Längsstreben 7, die parallel zueinander und mit Abstand angeordnet sind, vorgesehen sein.

An der Längsstrebe 7 ist, wie aus Figur 1 ersichtlich, ein Korb 10 befestigt, der sich von der Längsstrebe 7 in Richtung desjenigen Randbereichs 11 der Tischplatte 3 erstreckt, der vom Benutzer entfernt ist. Der Korb 10 dient zum Einlegen von Kabeln, Steckdosen und ähnlichen Komponenten. Es kann sich beim Korb 10 auch um eine Box zum Aufnehmen von elektrischen oder elektronischen Komponenten handeln, die bei höhenverstellbaren Tischen zum Ansteuern der Elektromotore erforderlich sind. Weiterhin können an der Längsstrebe 7 alternativ oder zusätzlich zum Korb 10 andere Halteelemente, insbesondere in der Form von Haltehaken, Halteklemmen, Kabelkanäle etc. befestigt sein. Weiterhin ist es auch denkbar, eine zusätzliche Längsstrebe 7 vorzusehen, welche relativ nah am Randbereich 11 der Tischplatte 3 verläuft und an seiner Oberseite zumindest teilweise geöffnet ist, um einen von oben her zugängigen Kabelkanal oder Aufnahmekanal für Funktionselemente wie Steckdosen etc. zu bilden.

Um die Zugängigkeit des Korbs 10 (oder anderer der vorstehend beschriebenen, nicht dargestellten Halteelemente oder Kanäle) zu verbessern und insbesondere von oben her zu ermöglichen, ist die Tischplatte 3 verschiebbar auf dem Tischgestell 2 gelagert. Ausgehend von der in Figur 1 gezeigten Stellung, in welcher die Tischplatte 3 das Tischgestell 2 sowie den Korb 10 überdeckt, kann die Tischplatte 3 in Richtung des Pfeils 12, d.h. in einer horizontalen Ebene quer zur Längsstrebe 7, soweit verschoben werden, dass die obere Öffnung des Korbs 10 nicht mehr von der Tischplatte 3 überdeckt, sondern von oben her zugänglich ist.

Zur verschiebbaren Lagerung der Tischplatte 3 umfasst das Tischgestell 2 zwei Auflagestreben 13 in der Form von Tragarmen, die benachbart zu den Horizontalstreben 6 angeordnet sind und parallel zu diesen verlaufen. Diese Auflagestreben 13 bilden eine verschiebbare Auflage für die Tischplatte 3, wie nachfolgend noch näher erläutert wird. Im dargestellten Ausführungsbeispiel sind die Auflagestreben 13 an den Befestigungskonsolen 8 befestigt, könnten jedoch auch an den Horizontalstreben 6 oder an der Längsstrebe 7 befestigt sein. Die Länge der Auflagestreben 13 ist so bemessen, dass sie sich zumindest über den überwiegenden Teil der Breite der Tischplatte 3 erstrecken.

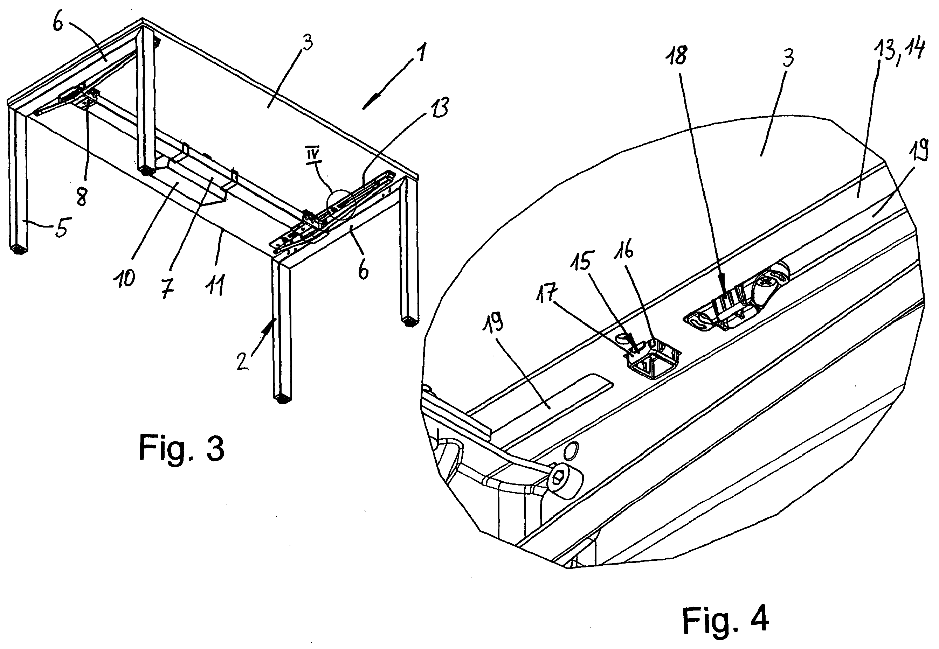

Wie aus Figur 2 ersichtlich, sind an der oberen Seite einer oberen Wand 14 der Auflagestreben 13 mehrere, im vorliegenden Fall drei, plättchenförmige Auflagekissen 15 befestigt, auf welche die Tischplatte 3 aufgelegt wird. Die Auflagekissen 15 bestehen aus einem Material, auf dem die Tischplatte 3 gut gleiten kann, insbesondere aus Kunststoff. Die Befestigung der Auflagekissen 15 in der Wand 14 kann beispielsweise dadurch erfolgen, dass, wie aus Figur 4 ersichtlich, die Wand 14 eine Aussparung 16 aufweist, in welche ein nach unten vorstehender Befestigungsabschnitt 17 der Auflagekissen 15 eingeklippst werden kann. Die oberen Auflageflächen der Auflagekissen 15 liegen in einer gemeinsamen Ebene, die geringfügig höher liegt als die obere Oberfläche der Horizontalstreben 6. Die auf den Auflagekissen 15 aufliegende Tischplatte 3 ist daher zu den Horizontalstreben 6 geringfügig vertikal beabstandet, so dass sie nicht auf den Horizontalstreben 6 aufliegt. Der Spalt zwischen den Horizontalstreben 6 und der Unterseite der Tischplatte 3 kann gegebenenfalls, falls erwünscht, mittels einer flexiblen, nicht dargestellten Dichtlippe verschlossen sein.

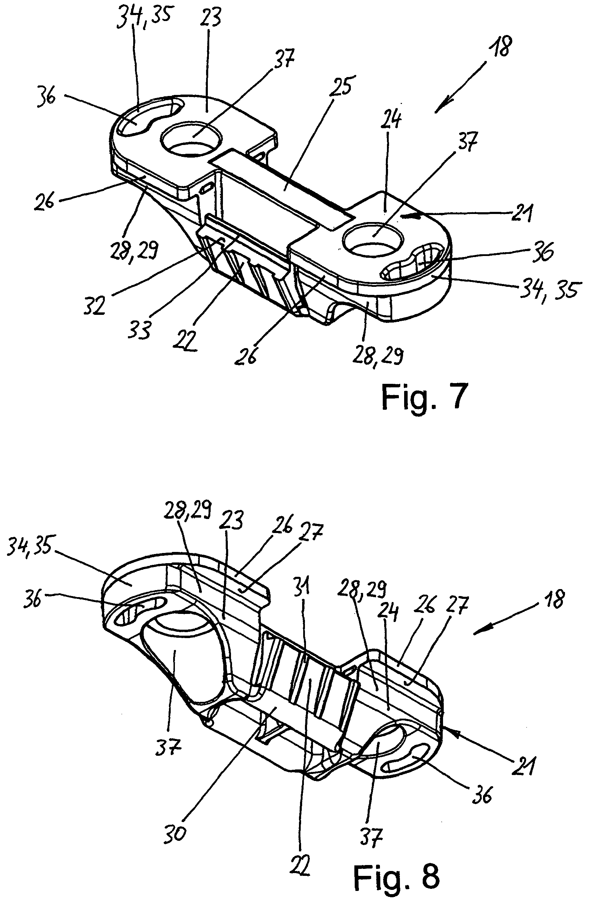

Die Schiebeführung der Tischplatte 3 an den Auflagestreben 13 erfolgt mittels einer Mehrzahl von Gleitführungselementen 18, die an der Unterseite der Tischplatte 3 festgeschraubt werden und in Führungsschlitzen 19 der Auflagestreben 13 längs verschiebbar geführt sind. Wie aus Figur 2 ersichtlich, weist jede Auflagestrebe 13 zwei fluchtend zueinander angeordnete Führungsschlitze 19 auf, wobei in jedem dieser Führungsschlitze 19 ein Gleitführungselement 18 eingesetzt ist. Die insgesamt vier Gleitführungselemente 18 sind identisch ausgebildet. Die Figuren 7 und 8 zeigen ein Gleitführungselement 18 in Alleinstellung. In Figur 2 sind mit der Bezeichnung 20 Schrauben angedeutet, die von unten nach oben durch die Gleitführungselemente 18 hindurchgeführt werden und mit denen die Gleitführungselemente 18 an der Tischplatte 3 festgeschraubt werden.

Anhand der Figuren 7 und 8 wird im Folgenden eines dieser Gleitführungselemente 18 näher beschrieben.

Das Gleitführungselement 18 ist einteilig ausgebildet und besteht aus einem länglichen Grundkörper 21 und zwei auf gegenüberliegenden Seiten des Grundkörpers 21 angeordneten Schnappschenkeln 22. Der Grundkörper 21 umfasst einen vorderen Befestigungsabschnitt 23, einen hierzu in Längsrichtung beabstandeten hinteren Befestigungsabschnitt 24 und einen Verbindungssteg 25, mit dem die beiden Befestigungsabschnitte 23, 24 miteinander verbunden sind. Beide Befestigungsabschnitte 23, 24 weisen jeweils einen Auflageabschnitt 26 auf, dessen Breite größer ist als die Breite des Führungsschlitzes 19. Die Auflageabschnitte 26 sind damit derart ausgebildet, dass sie mit unteren Flächen 27 auf der Oberseite der Auflagestreben 13 neben den Führungsschlitzen 19 aufliegen können, und andererseits als Auflage für die Tischplatte 3 dienen.

Unterhalb der Auflageabschnitte 26 schließen sich Führungsabschnitte 28 mit etwas verringerter Breite an. Die Führungsabschnitte 28 werden beidseits durch zueinander parallele Seitenführungsflächen 29 begrenzt, wobei die Breite der Führungsabschnitte 28 im Bereich der Seitenführungsflächen 29 nur geringfügig kleiner ist als die Breite der Führungsschlitze 19. Im eingesetzten Zustand liegen die Seitenführungsflächen 29 den seitlichen Begrenzungswänden des Führungsschlitzes 19 gegenüber und ermöglichen eine präzise Seitenführung der Gleitführungselemente 18 innerhalb der Führungsschlitze 19.

Die beiden Schnappschenkel 22 erstrecken sich von einem unteren Bereich des Grundkörpers 21, der unterhalb der Führungsabschnitte 28 liegt, schräg nach oben und außen. Lediglich in ihrem unteren Endbereich sind die Schnappschenkel 22 mittels einer federnden, im Querschnitt U-förmigen Verbindungswand 30 mit dem Verbindungssteg 25 verbunden, wodurch die Schnappschenkel 22 flexibel am Grundkörper 21 gehalten werden und quer zum Grundkörper 21 und damit quer zur Längsrichtung der Führungsschlitze 19 schwenkbar sind. Zur Erzielung der gewünschten Federeigenschaft der Schnappschenkel 22 ist es auch möglich, nicht oder nicht nur den Fußbereich der Schnappschenkel 22, sondern die Schnappschenkel 22 als Ganzes federnd zu gestalten.

Im unteren Bereich weisen die seitlichen Außenflächen der beiden Schnappschenkel 22 einen gegenseitigen Abstand auf, der geringfügig kleiner ist als die Breite der Führungsschlitze 19. Im oberen Bereich der Schnappschenkel 22 ist der gegenseitige Abstand der gegenüberliegenden Außenflächen dagegen größer als die Breite der Führungsschlitze 19, so dass die beiden Schnappschenkel 22 zusammengedrückt, d.h. in Richtung des mittleren Verbindungsstegs 25 geschwenkt werden, wenn die Gleitführungselemente 18 von oben nach unten in die Führungsschlitze 19 eingesetzt werden. Diese zusammengedrückte Stellung der Schnappschenkel 22 kann auch als Einführstellung bezeichnet werden. Um die damit verbundene Schwenkbewegung der Schnappschenkel 22 zu ermöglichen, ist die Breite des Verbindungsstegs 25 deutlich geringer als diejenige der Befestigungsabschnitte 23, 24, d.h. auch geringer als die Breite der Führungsabschnitte 28. Hierdurch wird zwischen Verbindungssteg 25 und Schnappschenkel 22 ein Freiraum geschaffen, der das Nachinnenschwenken der Schnappschenkel 22 zwischen den Befestigungsabschnitten 23, 24 ermöglicht.

Wie aus den Figuren 7 und 8 ersichtlich, können die Schnappschenkel 22 an ihrer Außenseite schräg nach oben verlaufende, nach außen vorstehende Rippen 31 aufweisen, die als Anlaufschrägen beim Hindurchführen der Schnappschenkel 22 durch die Führungsschlitze 19 dienen, und gleichzeitig Versteifungselemente insbesondere für den oberen Bereich der Schnappschenkel 22 darstellen.

Im eingesetzten Zustand untergreifen die Schnappschenkel 22 mit ihrer oberen Stirnfläche 32 die obere Wand 14 der Auflagestreben 13 in den Randbereichen neben den Führungsschlitzen 19. Diese Stellung der Schnappschenkel 22 kann auch als Untergreifstellung bezeichnet werden.

Von der Stirnfläche 32 aus erstreckt sich ein Führungssteg 33 nach oben, der sich in den Bereich der Führungsschlitze 19 hinein erstreckt und durch die nach außen wirkende Federkraft der Schnappschenkel 22 an den Seitenwänden der Führungsschlitze 19 gehalten wird. Diese Führungsstege 33 bestimmen somit die seitliche Relativposition der Schnappschenkel 22 relativ zum Grundkörper 21 und verhindern, dass bei einem Anheben der Tischplatte 3 die Schnappschenkel 22 nach außen weggedrückt werden.

Wie aus den Figuren 7 und 8 weiter ersichtlich, weisen die Gleitführungselemente 18 in den gegenüberliegenden Endbereichen jeweils einen federnd nachgiebigen Anschlagdämpfer 34 auf, der beim Verschieben der Tischplatte als Dämpfer wirkt, wenn das Ende des Verschiebewegs erreicht ist. Die Anschlagdämpfer 34 werden durch einen federnd nachgiebigen Endbereich des Grundkörpers 21 selbst gebildet, und zwar im dargestellten Ausführungsbeispiel durch eine flexible Stirnwand 35, die sich über einen angrenzenden Hohlraum 36 des Grundkörpers 21 erstreckt. Alternativ zu einer derartigen federnd nachgiebigen Stirnwand 35 kann der Anschlagdämpfer 34 auch aus separaten, weichen Dämpfungselementen oder separaten Federelementen bestehen, die in den Endbereichen des Grundkörpers 21 angeordnet sind. Zweckmäßigerweise wirken die Anschlagdämpfer 34 mit den Enden der Führungsschlitze 19, d.h. mit den stirnseitigen Endwänden der Führungsschlitze 19, zusammen. Es ist jedoch auch möglich, im Bereich der Führungsschlitze 19 separate Gegenanschläge vorzusehen, mit denen die Anschlagdämpfer 34 zusammenwirken.

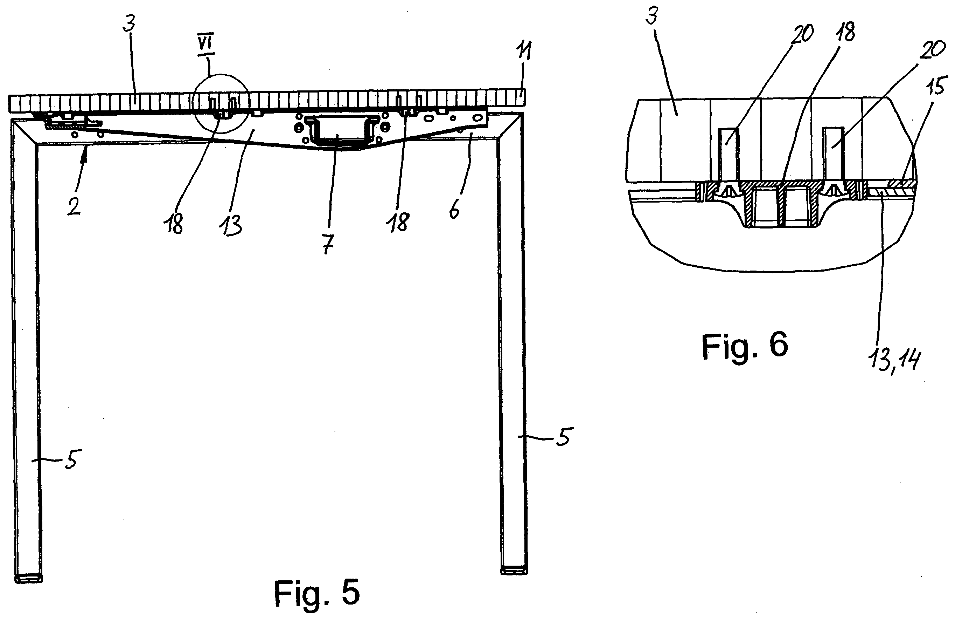

Die Befestigung der Gleitführungselemente 18 an der Unterseite der Tischplatte 3 erfolgt, wie aus den Figuren 5 und 6 ersichtlich, mittels zweier Schrauben 20. Diese Schrauben werden von unten nach oben durch Schraubenlöcher 37 (Figuren 7, 8) hindurchgeführt, die sich in den Befestigungsabschnitten 23, 24 befinden.

Wie aus Figur 2 ersichtlich, ist weiterhin zur Verriegelung der Tischplatte 3 in der in Figur 2 gezeigten Stellung ein Verriegelungselement 38 vorgesehen, das mittels Schrauben 39 an der Unterseite der Tischplatte 3 festschraubbar ist. Dieses Verriegelungselement 38 umfasst einen Haken, einen Schwenkhebel oder ein ähnliches Verriegelungsmittel, das in und außer Verriegelungseingriff mit einem Verriegelungsteil gebracht werden kann, das sich im Endbereich der Auflagestrebe 13 befindet.

Im Rahmen der Erfindung sind eine Vielzahl von Variationen möglich. Beispielsweise ist es möglich, anstelle der Auflagekissen 15, auf denen die Tischplatte 3 entlang gleiten kann, Rollen vorzusehen, die eine Rollenlagerung bilden. Weiterhin ist es auch denkbar, auf die Auflagestreben 13 zu verzichten und die Führungsschlitze 19 direkt in den Horizontalstreben 6 des Tischgestells 2 vorzusehen.

## Patentansprüche

1. Gleitführungselement zur verschiebbaren Befestigung einer Tischplatte (3) an Auflagestreben (13) eines Tischgestells (2), mit folgenden Merkmalen:
- das Gleitführungselement (18) weist einen an der Unterseite der Tischplatte (3) befestigbaren Grundkörper (21) mit einem Führungsabschnitt (28) auf, der in einen Führungsschlitz (19) der Auflagestreben (13) einsetzbar und innerhalb des Führungsschlitzes (19) verschiebbar ist und Seitenführungsflächen (29) zur seitlichen Führung innerhalb des Führungsschlitzes (19) aufweist,
- auf gegenüberliegenden Seiten des Grundkörpers (21) des Gleitführungselements (18) sind federnde Schnappschenkel (22) angeordnet, die zwischen einer Untergreifstellung, in der sie seitlich über den Führungsabschnitt (28) vorstehen, um eine Wand (14) der Auflagestreben (13) zu untergreifen, und einer Einführstellung bewegbar sind, in der sie durch den Führungsschlitz (18) der Auflagestreben (13) hindurchführbar sind,
**dadurch gekennzeichnet, dass** das Gleitführungselement (18) an mindestens einem seiner Endbereiche einen federnd nachgiebigen Anschlagdämpfer (34) aufweist.

2. Gleitführungselement nach Anspruch 1, **dadurch gekennzeichnet, dass** der Grundkörper (21) des Gleitführungselements (18) einen auf die Wand (14) der Auflagestreben (13) aufsetzbaren Auflageabschnitt (26) umfasst, der seitlich über den Führungsabschnitt (28) vorsteht.

3. Gleitführungselement nach Anspruch 1 oder 2, **dadurch gekennzeichnet, dass** die Schnappschenkel (22) des Gleitführungselements (18) einen Führungssteg (33) aufweisen, der in der Untergreifstellung in den Führungsschlitz (19) eingreift und dadurch die seitliche Relativposition der Schnappschenkel (22) zum Grundkörper (21) bestimmt.

4. Gleitführungselement nach einem der vorhergehenden Ansprüche, **dadurch gekennzeichnet, dass** sich die Schnappschenkel (22) von einem unteren Bereich des Grundkörpers (21) schräg nach oben erstrecken.

5. Gleitführungselement nach einem der vorhergehenden Ansprüche, **dadurch gekennzeichnet, dass** die Schnappschenkel (22) in Längsrichtung des Gleitführungselements (18) zwischen einem vorderen Befestigungsabschnitt (23) und einem hinteren Befestigungsabschnitt (24) des Gleitführungselements (18) angeordnet sind.

6. Gleitführungselement nach Anspruch 5, **dadurch gekennzeichnet, dass** der vordere und hintere Befestigungsabschnitt (23, 24) des Gleitführungselements (18) mittels eines Verbindungsstegs (25) miteinander verbunden sind, der eine geringere Breite als die Befestigungsabschnitte (23, 24) hat, wodurch ein Freiraum zum Hineinschwenken der Schnappschenkel (22) gebildet wird.

7. Gleitführungselement nach einem der vorhergehenden Ansprüche, **dadurch gekennzeichnet, dass** der Anschlagdämpfer (34) aus einem federnd nachgiebigen Endbereich des Grundkörpers (21) besteht.

8. Gleitführungselement nach Anspruch 7, **dadurch gekennzeichnet, dass** der federnd nachgiebige Endbereich des Grundkörpers (21) aus einer flexiblen Stirnwand (35) des Grundkörpers (21) besteht, die sich über einen angrenzenden Hohlraum (36) des Grundkörpers (21) erstreckt.

9. Tischplattenbefestigungssystem zur verschiebbaren Befestigung einer Tischplatte (3) an Auflagestreben (13) eines Tischgestells (2) mit einer Mehrzahl von Gleitführungselementen (18) nach einem der vorhergehenden Ansprüche, wobei die Auflagestreben (13) an ihrer Oberseite die Führungsschlitze (19) aufweisen, durch welche die Führungsabschnitte (28) der Gleitführungselemente (18) mit geringem seitlichen Spiel und die Schnappschenkel (22) hindurchführbar sind, und wobei die Wand (14) der Auflagestreben (13) von den sich in ihrer Untergreifstellung befindenden Schnappschenkeln (22) derart hintergriffen ist, dass ein Abheben der Tischplatte (3) vom Tischgestell (2) verhindert wird.

## Claims

1. Sliding-guide element for fastening a tabletop (3) movably on bearing struts (13) of a table frame (2), having the following features:
- the sliding-guide element (18) has a main body (21) which can be fastened to the underside of the tabletop (3), comprising a guide portion (28) which can be inserted into a guide slot (19) in the bearing struts (13) and can be moved in the guide slot (19), and has lateral guide surfaces (29) for lateral guidance in the guide slot (19),
- arranged on mutually opposed sides of the main body (21) of the sliding-guide element (18) are resilient snap-fit limbs (22) which can be moved between an underengagement position in which they project laterally over the guide portion (28) in order to engage under a wall (14) of the bearing struts (13), and an insertion position in which they can be guided through the guide slot (18) in the bearing struts (13),
**characterised in that** the sliding-guide element (18) has on at least one of its end regions a resiliently flexible end stop damper (34).

2. Sliding-guide element according to claim 1, **characterised in that** the main body (21) of the sliding-guide element (18) comprises a support portion (26) which can be positioned on the wall (14) of the bearing struts (13) and projects laterally over the guide portion (28).

3. Sliding-guide element according to either claim 1 or claim 2, **characterised in that** the snap-fit limbs (22) of the sliding-guide element (18) have a guide web (33) which, in the under-engagement position, engages in the guide slot (19) and thereby determines the lateral position of the snap-fit limbs (22) relative to the main body (21).

4. Sliding-guide element according to any of the preceding claims, **characterised in that** the snap-fit limbs (22) extend obliquely upwards from a lower region of the main body (21).

5. Sliding-guide element according to any of the preceding claims, **characterised in that** the snap-fit limbs (22) are arranged in the longitudinal direction of the sliding-guide element (18) between a front fastening portion (23) and a rear fastening portion (24) of the sliding-guide element (18).

6. Sliding-guide element according to claim 5, **characterised in that** the front and rear fastening portions (23, 24) of the sliding-guide element (18) are interconnected by means of a connecting web (25) which has a smaller width than the fastening portions (23, 24), as a result of which a clearance is formed for swivelling in the snap-fit limbs (22).

7. Sliding-guide element according to any of the preceding claims, **characterised in that** the end stop damper (34) consists of a resiliently flexible end region of the main body (21).

8. Sliding-guide element according to claim 7, **characterised in that** the resiliently flexible end region of the main body (21) consists of a flexible end wall (35) of the main body (21) which extends over an adjoining cavity (36) in the main body (21).

9. Tabletop fastening system for fastening a tabletop (3) movably on bearing struts (13) of a table frame (2), comprising a plurality of sliding-guide elements (18) according to any of the preceding claims, wherein the bearing struts (13) have on the upper side thereof the guide slots (19) through which the guide portions (28) of the sliding-guide elements (18) can be guided with a small lateral clearance and through which the snap-fit limbs (22) can be guided, and wherein snap-fit limbs (22), in the under-engagement position thereof, engage behind the wall (14) of the bearing struts (13) such that the tabletop (3) is prevented from lifting off the table frame (2).

## Revendications

1. Élément de guidage à coulissement pour une fixation déplaçable d'un plateau de table (3) sur des entretoises d'appui (13) d'un châssis de table (2), avec les éléments techniques suivants :
- l'élément de guidage à coulissement (18) comprend un corps de base (21) à fixer sur la face inférieure du plateau de table (3), avec un tronçon de guidage (28), qui est susceptible d'être mis en place dans une fente de guidage (19) des entretoises d'appui (13) et capable de se déplacer à l'intérieur de la fente de guidage (19), et qui comprend des surfaces de guidage latérales (29) pour le guidage latéral à l'intérieur de la fente de guidage (19),
- sur des côtés opposés du corps de base (21) de l'élément de guidage à coulissement (18) sont agencées des branches d'encliquetage (22) à effet ressort, qui sont déplaçables entre une position d'engagement par-dessous dans laquelle elles dépassent latéralement au-delà du tronçon de guidage (28), afin d'engager par-dessous une paroi (14) des entretoises d'appui (13), et une position d'introduction dans laquelle elles peuvent être passées à travers la fente de guidage (18) des entretoises d'appui (13),
**caractérisé en ce que** l'élément de guidage à coulissement (18) comprend au niveau de l'une au moins de ses zones terminales un amortisseur de butée (34) capable de fléchir de manière élastique.

2. Élément de guidage à coulissement selon la revendication 1, **caractérisé en ce que** le corps de base (21) de l'élément de guidage à coulissement (18) inclut un tronçon d'appui (26) susceptible d'être posé sur la paroi (14) des entretoises d'appui (13), qui dépasse latéralement au-delà du tronçon de guidage (28).

3. Élément de guidage à coulissement selon la revendication 1 ou 2, **caractérisé en ce que** les branches à encliquetage (22) de l'élément de guidage à coulissement (18) comprennent une barrette de guidage (13) qui, dans la position d'engagement par-dessous, s'engage dans la fente de guidage et détermine grâce à cela la position relative latérale des branches à encliquetage (22) par rapport au corps de base (21).

4. Élément de guidage à coulissement selon l'une des revendications précédentes, **caractérisé en ce que** les branches à encliquetage (22) s'étendent en oblique vers le haut depuis une zone inférieure du corps de base (21).

5. Élément de guidage à coulissement selon l'une des revendications précédentes, **caractérisé en ce que** les branches à encliquetage (22) sont agencées en direction longitudinale de l'élément de guidage à coulissement (18) entre une portion de fixation antérieure (23) et une portion de fixation postérieure (24) de l'élément de guidage à coulissement (18).

6. Élément de guidage à coulissement selon la revendication 5, **caractérisé en ce que** la portion de fixation antérieure et la portion de fixation postérieure (23, 24) de l'élément de guidage à coulissement (18) sont reliées l'une à l'autre au moyen d'une barrette de liaison (25) qui a une largeur plus faible que les portions de fixation (23, 24), grâce à quoi il se forme un espace libre pour que les branches à encliquetage (22) y entrent en pivotant.

7. Élément de guidage à coulissement selon l'une des revendications précédentes, **caractérisé en ce que** l'amortisseur de butée (34) est constitué par une zone terminale, capable de fléchir élastiquement, du corps de base (21).

8. Élément de guidage à coulissement selon la revendication 7, **caractérisé en ce que** la zone terminale, capable de fléchir élastiquement, du corps de base (21) est constituée par une paroi frontale flexible (35) du corps de base (21), qui s'étend au-dessus d'une cavité adjacente (36) du corps de base (21).

9. Système de fixation de plateau de table pour la fixation d'un plateau de table (3) avec possibilité de déplacement sur des entretoises d'appui (13) d'un châssis de table (2) avec une pluralité d'éléments de guidage à coulissement (18) selon l'une des revendications précédentes, dans lequel les entretoises d'appui (13) comportent au niveau de leurs faces supérieures les fentes de guidage (19) à travers lesquelles peuvent être passés les tronçons de guidage (28) des éléments de guidage à coulissement (18) avec un faible jeu latéral de même que les branches à encliquetage (22), et dans lequel la paroi (14) des entretoises d'appui (13) est engagée par l'arrière par les branches encliquetage (22) qui se trouvent dans leur position d'engagement par-dessous, de telle façon qu'un soulèvement du plateau de table (3) depuis le châssis de table (2) est empêché.
